(19) **Europäisches Patentamt**

**European Patent Office**

**Office européen des brevets**

(11) Veröffentlichungsnummer : **0 324 104 B1**

# EUROPÄISCHE PATENTSCHRIFT

(45) Veröffentlichungstag der Patentschrift :
16.10.91 Patentblatt 91/42

(51) Int. Cl.⁵ : **F16B 41/00, H01R 13/625,**
**// F16L37/10, F16C1/08**

(21) Anmeldenummer : **88120331.9**

(22) Anmeldetag : **06.12.88**

(54) **Anordnung zum Plombieren einer Renkverbindung.**

(30) Priorität : **24.12.87 DE 8717011 U**

(43) Veröffentlichungstag der Anmeldung :
**19.07.89 Patentblatt 89/29**

(45) Bekanntmachung des Hinweises auf die
Patenterteilung :
**16.10.91 Patentblatt 91/42**

(84) Benannte Vertragsstaaten :
**AT DE ES FR GB IT NL SE**

(56) Entgegenhaltungen :
**DE-U- 7 326 905**
**DE-U- 8 717 011**

(73) Patentinhaber : **Mannesmann Kienzle GmbH**
**Heinrich-Hertz-Strasse 45**
**W-7730 Villingen-Schwenningen (DE)**

(72) Erfinder : **Rahn, Horst**
**Scheffelstrasse 15**
**W-7730 Villingen-Schwenningen (DE)**

## Beschreibung

Die Neuerung betrifft eine Anordnung zum Plombieren einer Renkverbindung mit einem an der Renkmutter axial verschiebbar gehalterten Sperrstück, welches in die Kurvennut des der Renkmutter zugeordneten Anschlußstutzens einschiebbar ist und mit einem Plombendraht, welcher durch im eingeschobenen Zustand des Sperrstücks miteinander fluchtende, in der Renkmutter und in dem Sperrstück befindliche Öffnungen hindurchziehbar ist.

Im allgemeinen ist es erforderlich, von Gebern erfaßte Meßwerte auf räumlich von diesen entfernt angeordnete, beispielsweise Meß- und Zählgeräte oder Steuer- und Regeleinrichtungen, zu übertragen, oder auch Geber mit Energie zu versorgen. Dabei ist es selbstverständlich, falls nicht eine berührungslose Übertragung vorgesehen ist, daß die erforderlichen Übertragungsmittel, ob es sich nun um sog. biegsame Wellen, also mechanische Mittel, elektrische, optische Kabel oder fluidische Leitungen und diesen zugeordnete Schutzhüllen handelt, geberseitig und geräteseitig mit geeigneten, in der Regel gut handhabbaren Anschlußmitteln versehen sind. Im allgemeinen ist hierzu das jeweilige Ende beispielsweise eines Kabels bzw. eines dem Kabel zugeordneten Schutzschlauches mit einer Verbindungshülse versehen, die mittels einer Überwurfmutter an einem an dem betreffenden Geber bzw. Meßgerät ausgebildeten Anschlußstutzen befestigt wird. Der leichteren Handhabung wegen werden in den Fällen, wo Schraubverbindungen nicht zwingend erforderlich sind, Renk- oder Bayonettverbindungen bevorzugt und die Überwurfmutter wird als Renkmutter ausgebildet sein.

Bei derartigen Renkverbindungen entstehen jedoch hinsichtlich der in vielen Fällen erforderliche Plombierung insofern Schwierigkeiten, weil im Gegensatz zu einer Schraubverbindung mit mehreren Umdrehungen der Überwurfmutter infolge des kleinen Drehwinkels einer Renkverbindung bei nicht sorgfältig verlegtem Plombendraht ein Lösen der Verbindung ohne die Plombierung zu beschädigen möglich ist.

Mit dem DE-U-7326905 wurde die eingangs genannte Plombieranordnung bekannt, mit der die geschilderten Mängel ausgeräumt sind und das Plombieren, abgesehen von einer gesteigerten Plombiersicherheit, entscheidend erleichtert ist, was sich insbesondere in ungünstigen Einbausituationen vorteilhaft auswirkt.

Vielfach werden die Übertragungsmittel, also optische oder elektrische Kabel oder biegsame, mechanische Wellen oder Schlauchverbindungen im Sichtbereich verlegt, wo für die Anschlußmittel auch eine ästhetische Wirkung erwartet wird, d. h. es werden für die Anschlußmittel relativ schlanke Formen angestrebt. Dies bedeutet einen verringerten Durchmesser der Überwurfmutter sowie eine geeignete und gegenseitig abgestimmte Formgestaltung von Verbindungshülse und Überwurfmutter, wobei im Grenzfalle die Überwurfmutter unverlierbar auf der Verbindungshülse gelagert sein kann und somit eine formmäßige und funktionelle Einheit gegeben ist. Begünstigt wird diese Abstimmung in den Fällen, in denen ein Kabel einen relativ starken Schutzschlauch aufweist oder Leitungen in einem Wellrohr verlegt sind und somit der Durchmesserunterschied zwischen einer dem Wellrohr zugeordneten Verbindungshülse und einer vorgesehenen Renkmutter verhältnismäßig gering ist und durch geeignete konische Übergänge leicht kaschiert werden kann.

Dieser Gestaltungstrend wirkt sich nun insofern nachteilig aus, als bei Renkverbindungen Renkmuttern kleineren Durchmessers schlechter zu handhaben sind, und er verhindert in Fällen, bei denen Renkverbindungen plombiert werden sollen, Lösungen gemäß dem DE-U-7326905 mit einem in die Renkmutter einschiebbaren Riegel, dem, wie der Gegenstand des Gebrauchsmusters zeigt, stirnseitig an der Renkmutter ausgebildete Ösen zugeordnet sind.

Die der vorliegenden Neuerung zugrunde liegende Aufgabe bestand somit darin, für eine Renkmutter, die an ihrer kabel- oder wellenseitigen Stirnseite unzugänglich ist, eine Anordnung zu finden, die im Prinzip eine Plombierung der Renkverbindung gemäß dem DE-U-7326905 gestattet.

Die Lösung dieser Aufgabe beschreibt das Kennzeichen des Anspruchs 1.

Die Neuerung bietet, abgesehen davon, daß die gestellte Aufgabe zufriedenstellend gelöst ist, den Vorteil, daß insbesondere bei Renkmuttern kleineren Durchmessers der auszubildende radiale Ansatz als Knebel ausgeformt werden kann. Damit läßt sich die Renkmutter erheblich leichter handhaben und im Durchmesser so klein wie möglich ausbilden. Vorteilhaft ist ferner, daß das Sperrstück unverlierbar mit der Renkmutter verbindbar und derart ausgebildet und geführt ist, daß es einerseits leicht handhabbar, d. h. in die Sperrstellung bringbar ist, andererseits das Befestigen der Renkmutter an einem Anschlußstutzen in keiner Weise behindert.

Außerdem sei erwähnt, daß für die Aufnahme des Sperrstücks und die Plombierfunktion an der Renkmutter erforderlichen Kulissen und Durchbrüche ausschließlich durch Entformen in axialer Richtung ausbildbar sind.

Im folgenden sei ein Ausführungsbeispiel der neuerungsgemäßen Anordnung anhand von Zeichnungen erläutert :
Es zeigen

FIGUR 1 eine Draufsicht der plombierten Anschlußmittel einer elektrischen Verbindung eines Gebers,
FIGUR 2 einen Längsschnitt durch die mitein-

ander in Wirkverbindung stehenden Anschluß-mittel — der Einfachheit halber wurde auf die Darstellung des Kabels bzw. der Leitungen verzichtet,

FIGUR 3 eine Frontansicht der gemäß FIGUR 1 ausgebildeten Renkmutter,

FIGUR 4 einen Querschnitt der Renkmutter gemäß der Schnittlinie A-B in FIGUR 1 und

FIGUR 5 eine perspektivische Darstellung des Sperrstücks.

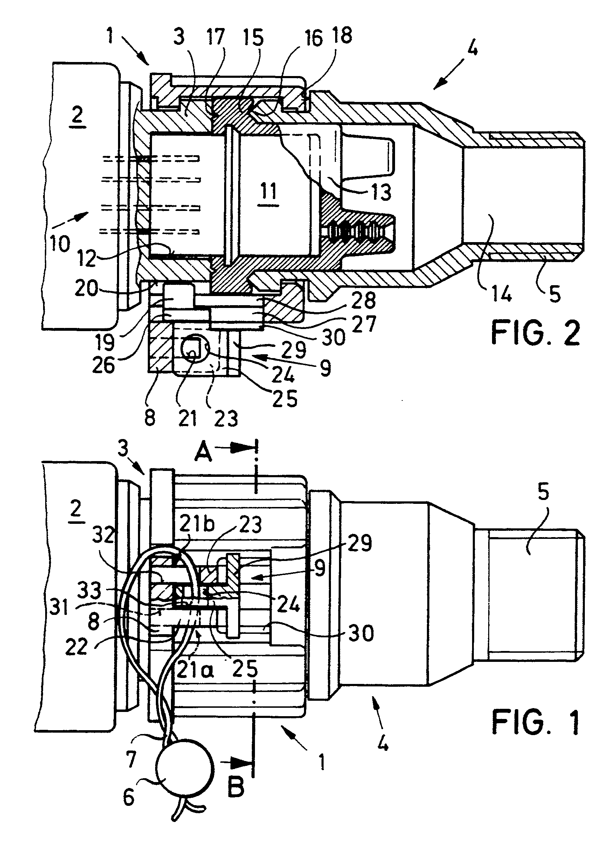

Aus der Draufsicht (FIGUR 1) ist ersichtlich, daß eine Renkmutter (1) mit einem beispielsweise an einem Gebergehäuse (2) ausgebildeten Anschlußstutzen (3) verbunden ist. Die Renkmutter (1) ist einer Verbindungshülse (4) zugeordnet, welche mit einem Gewindeansatz (5) versehen ist. Letzterer dient dem Befestigen beispielsweise eines — weil nicht neuerungswesentlich — nicht dargestellten Wellrohres, in welchem die mit dem Geber verbundenen elektrischen Leitungen verlegt sind. Ferner zeigt FIGUR 1 einen mit einer Plombe (6) gesicherten Plombendraht (7), welcher durch im folgenden noch näher bezeichnete Öffnungen in einem an der Renkmutter (1) ausgebildeten Ansatz (8) und einem der Renkmutter (1) zugeordneten Sperrstück (9) hindurchgefädelt ist.

Das Schnittbild (FIGUR 2) zeigt, daß den geberseitig angedeuteten Kontaktzungen (10) leitungsseitig ein Steckersockel (11) zugeordnet ist, in welchem mit den der Vereinfachung wegen nicht dargestellten Leitungen verbundene Kontaktfedern eingebettet sind. Auf den Steckersockel (11), der bei geschlossener Renkverbindung in einer im Anschlußstutzen (3) befindlichen Sackbohrung (12) zentriert ist, ist eine Schutzkappe (13) aufgesteckt, mit der einerseits die Verbindungshülse (4) — und somit der Kabelkanal (14) — andererseits der Kontaktbereich abgedichtet wird, in dem auf einen an der Schutzkappe (13) angeformten Bund (15) beim Einrenken der Renkmutter (1), zwischen einer an der Verbindungshülse (4) angeformten Schneide (16) und der mit einer Ringschneide (17) versehenen Stirnseite des Anschlußstutzens (3,) verspannt wird.

In dem in FIGUR 2 gezeigten Zustand greift das an der Renkmutter (1), die mit der Verbindungshülse (4) in einer Ringnut (18) verrastet und auf dieser drehbar gelagert ist, axial verschiebbar angeordnete Sperrstück (9) mit einem Riegel (19) in eine am Anschlußstutzen (3) angeformte Kurvennut (20) der Renkverbindung ein. Dadurch wird ein Verdrehen der Renkmutter (1) verhindert. In dieser Stellung bilden außerdem Öffnungen (21 a und 21 b) in den beiden Schenkeln (22 und 23) des Ansatzes (8) und eine Öffnung (24) in einer am Sperrstück (9) ausgebildeten Zunge (25) eine nichtnäher bezeichnete Durchgangsöffnung für den Plombendraht (7). Beim Versuch, das Sperrstück (9) außer Eingriff mit der Kurvennut (20) zu bringen, wird der Plombendraht in diesem Falle nicht auf Dehnung, sondern — was die besonders vorteilhafte Plombiersicherheit liefert — auf Scherung beansprucht.

Die Lagerung und Führung des Sperrstücks (9) erfolgt mittels einer Führungsplatte (26), welcher eine in der Renkmutter (1) axial ausgeformten Tasche (27) zugeordnet ist. Die Tasche (27) ist mit einem Schlitz (28) versehen, durch welchen der Riegel (19) in den Innenraum der Renkmutter (1) eingreift. Mit (29) ist eine der Handhabung des Sperrstücks (9) dienende Griffplatte bezeichnet. Für das Einsetzen des Sperrstücks (9) in die Tasche (27) ist die Tasche (27) mit einer von der Tasche (27) leicht hinterschnittenen Freisparung (30) versehen, d. h., die Führungsplatte wird in die Tasche (27) eingerastet und ist somit unverlierbar an der Renkmutter (1) gehaltert.

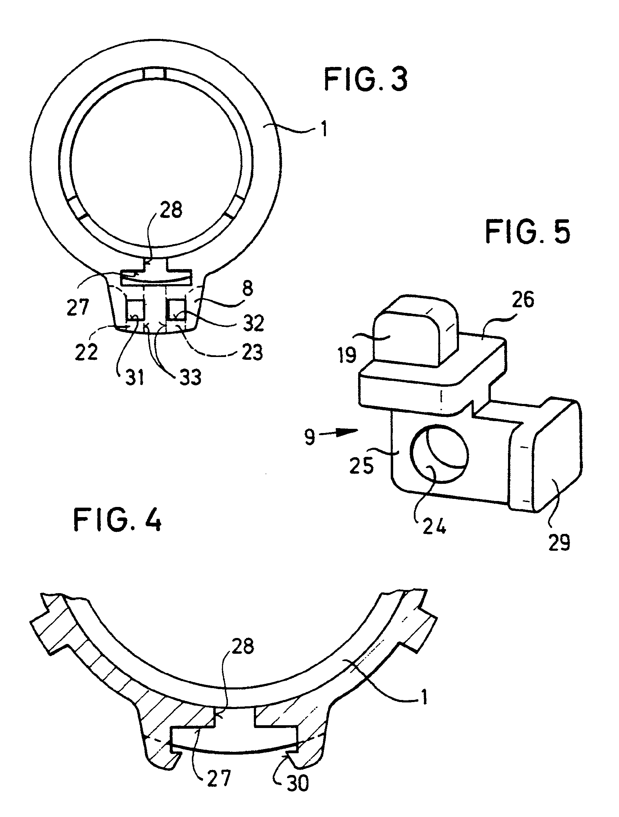

Der Vollständigkeit halber sei noch erwähnt, daß mit (31 und 32) in FIGUR 3 Öffnungen bezeichnet sind, die zusammen mit einem Schlitz (33), der in einem Ansatz (8) die Schenkel (22 und 23) bildet, die Öffnungen (21 a und 21 b) quer zur Achse der Renkmutter (1) formen. Das heißt, die Renkmutter (1) ist als Spritzgußteil derart gestaltet, daß lediglich Schieber in axialer Richtung erforderlich sind.

## Patentansprüche

1. Anordnung zum Plombieren einer Renkverbindung mit einem an der Renkmutter axial verschiebbar gehaltenen Sperrstück, welches in die Kurvennnut des der Renkmutter zugeordneten Anschlußstutzens einschiebbar ist und mit einem Plombendraht, welcher durch im eingeschobenen Zustand des Sperrstücks miteinander fluchtende, in der Renkmutter und in dem Sperrstück befindliche Öffnungen hindurchziehbar ist, dadurch gekennzeichnet, daß an dem Sperrstück (9) eine Führungsplatte (26) ausgebildet ist, an welcher im wesentlichen rechtwinklig einerseits ein Riegel (19), andererseits eine mit einer Öffnung (24) versehene Zunge (25) angeformt sind, daß in der Renkmutter (1) eine Aufnahme der Führungsplatte (26) des Sperrstücks (9) dienende, mit einem Schlitz (28) versehene Tasche (27) derart ausgebildet ist, daß sie ein Durchgreifen des Riegels (19) in den Innenraum der Renkmutter (1) und eine in bezug auf die Renkmutter (1) axiale Verschiebung des Sperrstücks (9) zwischen einer Ver- und einer Entriegelungsstellung gestattet und daß am Umfang der Renkmutter (1) ein mit einer Öffnung (21) versehener Ansatz (8, 22, 23) mit wenigstens einer achsparallelen Fläche ausgebildet ist, mit welcher sich zumindest in der Sperrstellung des Riegels (19), in welcher die Öffnungen (21, 24) in Zunge (25) und Ansatz (8, 22, 23) im wesentlichen fluchten, die Zunge (25) des Sperrstücks (9) in einer unmittelbaren Parallellage befindet.

2. Anordnung nach Anspruch 1, dadurch gekennzeichnet, daß der Ansatz (8, 22, 23) als Knebel mit einem der Zunge (25) des Sperrstücks (9) zugeordneten Schlitz ausgebildet ist.

3. Anordnung nach Anspruch 1, dadurch gekennzeichnet, daß die Tasche (27) am Umfang der Renkmutter (1) eine Freisparung (30) aufweist und daß die Führungsplatte (2) des Sperrstücks (9) über diese Freisparung (30) in die Tasche (27) einrastbar ist.

4. Anordnung nach Anspruch 1, dadurch gekennzeichnet, daß die für die Anordnung des Sperrstücks (9) ausgebildete Renkmutter (1) spritzgußtechnisch hergestellt wird und ausschließlich in axialer Richtung entformbar ist.

## Claims

1. Arrangement for lead sealing a bayonet connection, having a locking piece held axially displaceably on the bayonet nut, which locking piece may be pushed into the curved groove of the tubular connection piece associated with the bayonet nut, and having a locking wire which may be pulled through openings lying flush with one another in the pushed-in state of the locking piece and located in the bayonet nut and in the locking piece, characterized in that constructed on the locking piece (9) is a guide plate (26) on which on the one hand a bar (19) is integrally formed, and on the other hand a tongue (25) provided with an opening (24) is integrally formed substantially at right angles, in that a pocket (27) provided with a slot (28) and serving to receive the guide plate (26) of the locking piece (9) is constructed in the bayonet nut (1) such that the pocket (27) permits the bar (19) to penetrate into the interior space of the bayonet nut (1) and the locking piece (9) to be displaced axially with respect to the bayonet nut (1) between a locking and an unlocking position, and in that constructed on the periphery of the bayonet nut (1) is an attachment piece (8, 22, 23) provided with an opening (21) and having at least one axially parallel face with which, at least in the locked position of the bar (19) in which the openings (21, 24) in tongue (25) and attachment piece (8, 22, 23) lie substantially flush with one another, the tongue (25) of the locking piece (9) is located in a directly parallel position.

2. Arrangement according to Claim 1, characterized in that the attachment piece (8, 22, 23) is constructed as a toggle having a slot associated with the tongue (25) of the locking piece (9).

3. Arrangement according to Claim 1, characterized in that the pocket (27) has a recess (30) on the periphery of the bayonet nut (1), and in that the guide plate (26) of the locking piece (9) may be latched into the pocket (27) via this recess (30).

4. Arrangement according to Claim 1, characterized in that the bayonet nut (1) constructed for the arrangement of the locking piece (9) is produced by the injection moulding technique and is deformable exclusively in the axial direction.

## Revendications

1. Dispositif pour le plombage d'un raccord à baïonnette avec, monté mobile dans le sens axial sur l'écrou à baïonnette, un élément d'arrêt qui peut être inséré dans la rainure à came de la tubulure de raccordement associée audit écrou à baïonnette et avec un fil de plombage lequel, dans l'état introduit de l'élément d'arrêt, peut être passe par des orifices, pratiques dans ledit écrou à baïonnette et dans ledit élément d'arrêt, qui se trouvent alignes les uns par rapport aux autres, caractérisé par le fait que sur l'élément d'arrêt (9) est formée une plaquette de guidage (26) sur laquelle est moulée, pour l'essentiel perpendiculairement, d'une part un verrou (19), d'autre part une languette (25) pourvue d'un orifice (24), que dans l'écrou à baïonnette (1), une poche (27) servant à loger la plaquette de guidage (26) de l'élément d'arrêt (9) et étant pourvue d'une fente (28) est réalisée de telle sorte qu'elle permette une pénétration du verrou (19) dans l'espace intérieur de l'écrou à baïonnette (1) et un déplacement axial par rapport à l'écrou à baïonnette (1) de l'élément d'arrêt (9) entre une position de verrouillage et une position de déverrouillage et qu'au pourtour de l'écrou à baïonnette (1) est formée une saillie (8, 22, 23) pourvue d'un orifice (21) avec au moins une surface parallèle à l'axe avec laquelle, au moins dans la position de verrouillage du verrou (19) dans laquelle les orifices (21, 24) dans la languette (25) et la saillie (8, 22, 23) sont, pour l'essentiel, alignés, la languette (25) de l'élément d'arrêt (9) se trouve dans une position parallèle directe.

2. Dispositif selon la revendication 1, caractérisé par le fait que la saillie (8, 22, 23) est réalisée sous forme de manette avec une fente associée à la languette (25) de l'élément d'arrêt (9).

3. Dispositif selon la revendication 1, caractérisé par le fait que la poche (27) au pourtour de l'écrou à baïonnette (1) présente un évidement (30) et que la plaquette de guidage (26) de l'élément d'arrêt (9) peut être enclenchée, par l'intermédiaire dudit évidement (30), dans la poche (27).

4. Dispositif selon la revendication 1, caractérisé par le fait que l'écrou à baïonnette (1) réalisé pour la disposition de l'élément d'arrêt (9) est fabriqué en technique de moulage par injection et qu'il ne peut être démoulé que dans le sens axial.

FIG. 2

FIG. 1

FIG. 3

28

27

8

22    32

31    33    23

FIG. 5

19    26

9 →

25    24    29

FIG. 4

28

1

27    30